# FASCICULE DE BREVET EUROPEEN

(11) **EP 1 449 470 B1**
(45) Date de publication et mention de la délivrance du brevet: **07.03.2007**
(21) Numéro de dépôt: 04356013.5
(22) Date de dépôt: 11.02.2004
(51) Int. Cl.: A47J 37/08, H05B 3/16

(54) **Elément chauffant et grille-pain électrique à isolation thermique**
Heizelement und elektischer Toaster mit thermischer Isolation
Heating element and electic toaster with thermal isolation

(30) Priorité: 19.02.2003 FR 0302042
(43) Date de publication de la demande: 25.08.2004
(73) Titulaire: SEB S.A., 69130 Ecully (FR)
(72) Inventeur: Reyes, Lionel, 88200 Remiremont (FR); Klinger, Michel, 68140 Stosswihr (FR); Balandier, Jean-Marie, 21240 Talant (FR); Mauffrey, Guy, 70280 Breuchotte (FR)
(74) Mandataire: Kiehl, Hubert

(56) Documents cités:
- FR-A- 2 175 783
- US-A- 2 669 925
- US-A- 2 779 850
- US-A- 4 396 825

## Description

La présente invention concerne un élément chauffant à isolation thermique. La présente invention vise également un perfectionnement apporté aux grille-pain électriques en ce qui concerne l'isolation thermique de la paroi du boîtier extérieur.

Un grille-pain électrique comporte un boîtier extérieur et une chambre de cuisson à l'intérieur de laquelle est placé un chariot porte-pain mobile sur lequel est disposé le pain devant être grillé. Des conditions de sécurité, concernant les risques de brûlures par des utilisateurs pouvant éventuellement toucher le boîtier extérieur, doivent être impérativement respectées. En outre, les développements en cours concernent l'obtention de grille-pain présentant des dimensions de plus en plus compactes, tout en essayant de garder des puissances élevées.

Si la hauteur, la largeur et la profondeur de la chambre de cuisson restent des données fixes et sont déterminées à l'avance en fonction de la taille des différents pains devant être grillés, les dimensions des éléments chauffants peuvent varier. De façon générale, un grille-pain comporte des moyens de chauffage qui peuvent fonctionner soit par rayonnement, soit par conduction.

Dans le premier cas, le pain devant être grillé vient en regard des éléments chauffants rayonnants et reçoit ainsi la quantité d'énergie nécessaire à leur cuisson. Dans le deuxième cas, le pain devant être grillé vient au contact des éléments chauffants par conduction pendant un temps nécessaire pour obtenir la cuisson satisfaisante. Dans le premier et le deuxième cas, deux principaux éléments chauffants coexistent actuellement, sous la forme d'éléments chauffants par résistance avec ou sans tube quartz et sous la forme d'éléments chauffants à ruban résistifs.

### Etat de la technique

On connaît, par le document FR 2175783, un grille-pain comprenant des éléments chauffants, constitués de feuilles de mica sur lesquelles sont bobinés des rubans résistifs, situés de part et d'autre de la chambre de cuisson. Entre les feuilles de mica et le boîtier extérieur sont disposés des réflecteurs et/ou éléments calorifuges permettant de constituer un écran de protection pour le boîtier extérieur.

Cette première conception compacte de l'élément chauffant ne permet cependant pas de garantir une bonne isolation thermique, car la face arrière des feuilles de mica rayonne beaucoup en direction du réflecteur et du boîtier extérieur. Le réflecteur joue son rôle en renvoyant une partie du rayonnement, mais il s'échauffe aussi et transmet à son tour une partie du rayonnement vers le boîtier extérieur. A ces phénomènes thermiques se rajoutent les convections existantes entre les feuilles de mica et le réflecteur, ainsi qu'entre le réflecteur et le boîtier extérieur. Cela peut conduire à un échauffement important du boîtier extérieur et oblige donc à prévoir un écartement important entre ce dernier et le réflecteur. Il en résulte un grille-pain finalement peu compact.

Un deuxième grille-pain connu, commercialisé par la société Taurus, sous la dénomination My Toast® , comprend deux éléments chauffants, constitués par des rubans résistifs placés entre deux feuilles de mica, situés de part et d'autre de la chambre de cuisson. Ce grille-pain comprend successivement et vu en coupe transversale, depuis le centre de la chambre de cuisson : une grille, une première feuille de mica mince, une deuxième feuille de mica plus épaisse bobinée avec du ruban résistif, un réflecteur en tôle et un boîtier extérieur en plastique. Un toit métallique permet par ailleurs d'éviter un retour du boîtier plastique sur le dessus qui s'avère être la zone habituellement la plus chaude.

Cependant, cette deuxième conception ne permet ni d'isoler la chambre de cuisson, ni de réduire la température des parois.

Il a été proposé, dans le document FR 1.596.661, un grille-pain comprenant un boîtier composé de deux parties distinctes. Une partie extérieure est emboîtée dans une partie intérieure, de façon à ménager entre-elles un espacement dans lequel circule de l'air de convection refroidissant la paroi de la partie extérieure.

Cependant, le volume supplémentaire dû au rajout de la partie extérieure et de l'espacement vient d'autant accroître plus l'encombrement général du grille-pain.

### Résumé de l'invention

Un premier but de l'invention est de mettre au point un élément chauffant perfectionné pouvant s'installer à l'intérieur de tous types de grille-pain.

Un deuxième but de l'invention est de concevoir un dispositif grille-pain présentant une bonne isolation thermique au niveau du boîtier extérieur, dans un encombrement réduit et pour un coût modeste.

Un troisième but est de proposer un grille-pain compact dont le fonctionnement est plus sûr par rapport aux risques de brûlures pour les utilisateurs.

Un quatrième but encore est d'améliorer le rendement des éléments chauffants et du grille-pain et notamment le rapport entre le temps de grillage voulu et la puissance nécessaire, avec au choix, un gain de temps ou d'énergie.

Ces buts sont atteints avec un élément chauffant, notamment destiné à un grille-pain, présentant au moins une feuille de mica sur laquelle est bobiné un ruban chauffant.

Conformément à un premier aspect de l'invention, l'élément chauffant est caractérisé en ce qu'il comprend en outre :
- un dispositif de maintien destiné à tenir la ou les feuilles de mica et à former un premier réflecteur ; et
- une plaque solidarisée au dispositif de maintien et destinée à former un deuxième réflecteur.

Autrement dit, la présence de deux réflecteurs permet, dans un encombrement minime, de réduire la température au niveau de l'arrière de l'élément chauffant. Les pertes thermiques sont diminuées, ce qui permet de monter un tel élément chauffant dans un grille-pain. Le grille-pain obtenu va nécessiter ainsi une puissance électrique plus faible par rapport aux grille-pain de l'état de la technique, et ceci pour la même qualité de grillage du pain.

De préférence, le dispositif de maintien peut être séparé de la ou des feuilles de mica par un premier espacement. Le dispositif de maintien peut avantageusement comprendre une ou plusieurs saillies venant en contact avec la ou les feuilles de mica et définissant l'épaisseur du premier espacement. La ou les saillies peuvent se présenter sous la forme de nervures longitudinales. Ces nervures peuvent former au moins deux volumes distincts sensiblement fermés situés à l'intérieur du premier espacement. Ces volumes obtenus constituent des alvéoles séparées d'air isolé chaud, qui empêchent la convection entre la ou les feuilles de mica et le dispositif de maintien.

La plaque peut être séparée du dispositif de maintien par un deuxième espacement. La plaque peut comprendre une ou plusieurs excroissances venant en contact avec le dispositif de maintien. Cette ou ces excroissances peuvent définir l'épaisseur du deuxième espacement et peuvent former un volume sensiblement fermé situé à l'intérieur du deuxième espacement. Ce volume obtenu constitue une alvéole séparée d'air isolé, qui empêche la convection entre le dispositif de maintien et la plaque. Ainsi, la chaleur pour le grillage du pain est transmise essentiellement par rayonnement thermique sans chaleur de convection.

De préférence, on cherchera à minimiser les zones de contact afin de réduire les transferts de chaleur par conduction.

Le dispositif de maintien et la plaque peuvent être réalisés en tôle métallique emboutie et pliée et/ou avec traitement de surface et peuvent avoir des propriétés de réflectivité thermique.

Conformément à un deuxième aspect de l'invention, un grille-pain électrique comprend une semelle, un boîtier, une chambre de cuisson s'ouvrant par une fente d'entrée et de sortie du pain et intégrant un chariot porte pain mobile, et au moins un élément chauffant, sensiblement vertical, tel que définis ci-dessus.

Le boîtier peut être séparé de la plaque de l'élément chauffant par un troisième espacement. Ce troisième espacement peut former un volume ouvert au niveau de son extrémité supérieure vers la fente d'introduction du pain devant être grillé. La plaque peut comprendre de manière optionnelle une ou plusieurs entretoises pouvant venir en contact avec le boîtier.

La semelle peut comprendre une ou plusieurs ouvertures d'admission d'air pouvant être en continuité avec le troisième espacement. Ceci permet une aspiration d'air frais entre le boîtier et la plaque, ce qui refroidit d'avantage cet espacement et limite donc l'échauffement du boîtier.

### Description des dessins

L'invention sera bien comprise et ses divers avantages et différentes caractéristiques ressortiront mieux lors de la description suivante, de l'exemple non limitatif de réalisation, en référence aux dessins schématiques annexés, dans lesquels :
- la figure 1 représente une vue en perspective d'un grille-pain ;
- la figure 2 représente une vue en coupe transversale du grille-pain conformément à l'invention ;
- la figure 3 représente une vue en perspective d'un raidisseur ;
- la figure 4 représente une vue en perspective d'un deuxième réflecteur ;
- la figure 5 représente une vue en perspective d'un élément chauffant ;
- la figure 6 représente une vue latérale d'un élément chauffant,
- la figure 7 représente une vue en perspective d'un élément chauffant selon une variante de réalisation,
- la figure 8 représente une vue latérale d'un élément chauffant selon une variante de réalisation.

### Description détaillée de l'invention

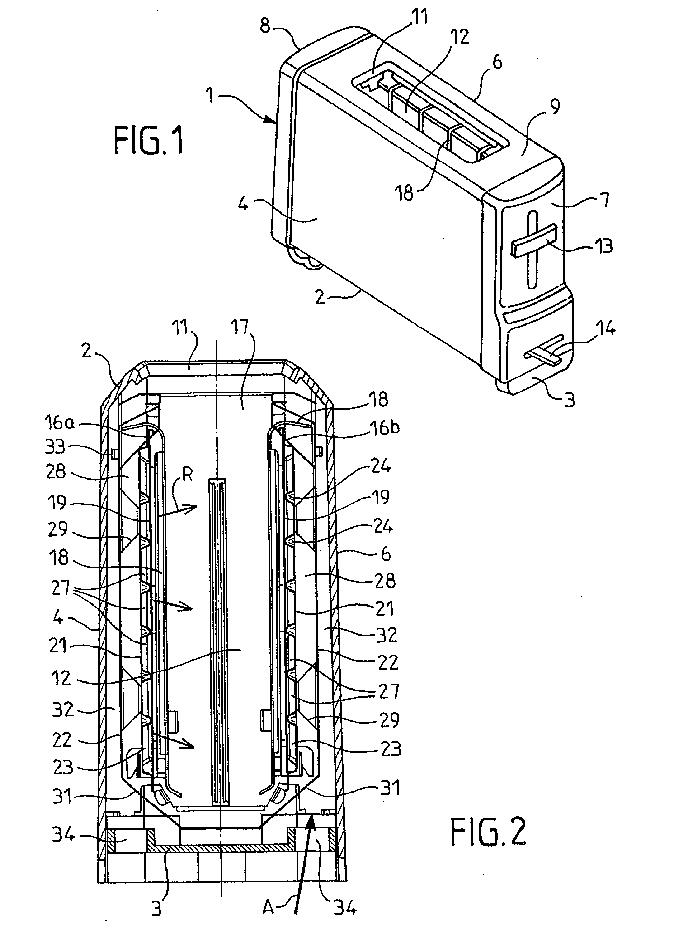

En se référant à la figure 1, un grille-pain (1) comprend un bâti extérieur sous la forme d'un boîtier extérieur (2) disposé sur une semelle de base (3). Le boîtier extérieur (2) présente ainsi cinq faces, deux grandes faces latérales (4 et 6), deux petites faces d'extrémité (7 et 8) et une face supérieure (9).

Dans la face supérieure (9) du boîtier extérieur (2) est ménagée une fente d'introduction (11) du pain devant être grillé. Cette fente d'introduction (11) donne accès à la chambre de cuisson sous-jacente (12). Cette chambre de cuisson (12) comporte un chariot porte-pain, non représenté, dont la géométrie est étudiée pour, à la fois supporter le poids du pain devant être grillé, tout en évitant l'accumulation de miettes.

Dans l'une des petites faces d'extrémité (7) sont prévus des moyens manuels (13) pour faire descendre verticalement le chariot porte-pain et ainsi le pain devant être grillé au sein de la chambre de cuisson (12) et des moyens de réglages de la température (14) selon l'intensité de grillage souhaitée.

Comme cela est plus particulièrement visible en figure 2, deux éléments chauffants (16a et 16b) sont insérés verticalement à l'intérieur de la chambre de cuisson (12). Par ailleurs, la chambre de cuisson (12) est fermée à ses deux extrémités par les montants latéraux (17).

Les éléments chauffants (16a et 16b) comprennent chacun une grille (18) entrant en contact avec le pain devant être grillé et destinée à empêcher que le pain ne viennent se carboniser contre les pièces chauffantes rayonnantes. On notera que, dans certains modes de réalisation, les grilles (18) peuvent être montées de manière à pivoter l'une en direction de l'autre pour centrer le pain par rapport aux éléments chauffants. Les pièces chauffantes rayonnantes comprennent une feuille de mica (19) sur la face avant de laquelle est bobiné un ruban chauffant (non visible dans les figures), tel qu'il est connu dans le domaine.

Conformément à l'invention, un dispositif de maintien (21), appelé également raidisseur, est intercalé entre la feuille de mica (19) et le boîtier extérieur (2). Le raidisseur (21) est destiné à tenir la feuille de mica (19) et forme un premier réflecteur. Conformément à l'invention, une plaque (22) est intercalée entre le dispositif de maintien (21) et le boîtier extérieur (2). La plaque (22) est destinée à former un deuxième réflecteur.

Le raidisseur (21) se présente globalement sous la forme d'une plaque sensiblement plane. Le raidisseur (21) est séparé de la feuille de mica (19) par un premier espacement (23). Le raidisseur (21) comprend plusieurs saillies (24) se déployant à partir de sa face avant et venant en contact avec la face arrière de la feuille de mica (19). Le raidisseur (21) comprend quatre replis latéraux (25) se déployant à partir de sa face avant et orientés vers la feuille de mica (19). Le raidisseur (21) comprend également deux rebords longitudinaux (26) se déployant à partir de sa face avant et orientés également vers la feuille de mica (19). Par un pliage sur eux-mêmes, les rebords longitudinaux (26) forment une rainure qui sert à maintenir et à ancrer la feuille de mica (19).

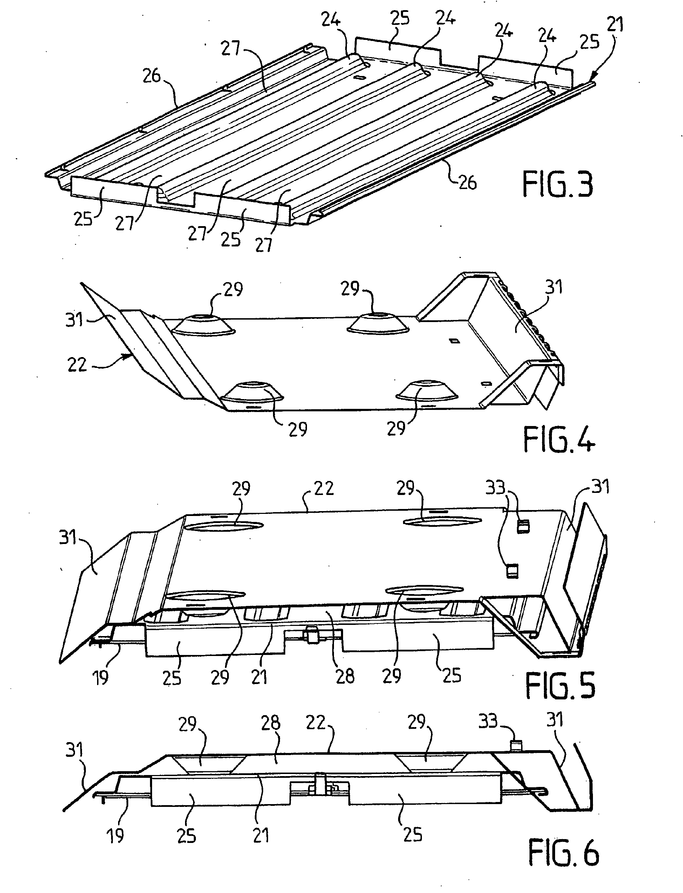

Les saillies (24) ont une hauteur déterminées et elles définissent l'épaisseur du premier espacement (23). Les saillies (24) se présentent sous la forme de nervures longitudinales horizontales formant entre-elles, avec les replis latéraux (25) et avec les rebords longitudinaux (26) plusieurs volumes distincts (27) fermés situés à l'intérieur du premier espacement (23). Dans le mode de réalisation de la figure 2, le raidisseur (21) comprend six saillies (24). Dans le mode de réalisation des figures 3 et 5, le raidisseur (21) comprend quatre saillies (24).

Ces volumes distincts (27) sont régulièrement répartis sur la face avant du raidisseur (21), s'allongeant d'un repli latéral (25) à l'autre de celui-ci, de manière à s'étager verticalement du haut vers le bas du grille-pain équipé dudit raidisseur (21).

Dans le mode de réalisation de la figure 2, les six saillies (24) et les deux rebords longitudinaux (26) forment sept volumes distincts (27). Dans le mode de réalisation des figures 3 et 5, les quatre saillies (24) et les deux rebords longitudinaux (26) forment cinq volumes distincts (27). Dans une variante de réalisation, le premier espacement (23) ou l'un ou plusieurs des volumes distincts (27) sont remplis par un isolant thermique massique, sous la forme d'une mousse minérale ou autre équivalent.

Le deuxième réflecteur (22) est séparé du raidisseur (21) par un deuxième espacement (28). Le deuxième réflecteur (22) comprend plusieurs excroissances (29) se déployant à partir de sa face avant et venant en contact avec la face arrière du raidisseur (21). Le deuxième réflecteur (22) comprend également deux rebords longitudinaux (31) se déployant à partir de sa face avant et orientés vers le raidisseur (21).

Les excroissances (29) ont une hauteur déterminée et elles définissent l'épaisseur du deuxième espacement (28). Les excroissances (29) se présentent sensiblement sous la forme de cône tronqué et sont régulièrement réparties sur la face avant du deuxième réflecteur (22). Dans le mode de réalisation des figures, le deuxième réflecteur (22) comprend quatre excroissances (29) sensiblement aux quatre coins du deuxième réflecteur (22). Avec les rebords longitudinaux (31) et les excroissances (29), un volume sensiblement fermé est établi à l'intérieur du deuxième espacement (28).

Dans une variante de réalisation, le deuxième espacement (28) ou volume fermé est rempli par un isolant thermique massique, sous la forme d'une mousse minérale ou autre équivalent.

Par le positionnement de l'élément chauffant (16a et 16b) à l'intérieur du boîtier extérieur (2), le deuxième réflecteur (22) est séparé du boîtier extérieur (2) par un troisième espacement (32). Le troisième espacement (32) forme un volume ouvert au niveau de son extrémité supérieure en direction de la fente (11 ).

Le deuxième réflecteur (22) comprend deux entretoises (33) se déployant à partir de sa face arrière et venant en contact avec la face interne du boîtier extérieur (2). La semelle (3) comprend deux ouvertures d'admission d'air non chauffé (34), chacune correspondant à un élément chauffant (16a ou 16b), en continuité avec le troisième espacement (32).

Le raidisseur (21) et le deuxième réflecteur (22) sont réalisés en tôle métallique emboutie et pliée ayant de bonnes propriétés de réflectivité thermique. Le rebord longitudinal supérieur (31) du deuxième réflecteur (22) présente une conformation optimisée, notamment pour assurer une protection thermique du boîtier extérieur (2) autour de la fente d'introduction (11) du pain.

### Fonctionnement de l'invention

Lors du début du cycle de grillage, le pain est introduit dans la chambre de cuisson (12), entre les grilles (18). Le chariot porte-pain est descendu par l'utilisateur à l'aide des moyens manuel (13), ce qui déclenche l'alimentation électrique des éléments chauffants (16a et 16b) et le maintien du pain dans la chambre de cuisson (12).

Les rubans résistifs dissipent la chaleur par rayonnement (flèches R en figure 2), dans toutes les directions. Parallèlement, deux types de transfert de chaleur se mettent en place : le rayonnement direct de tous les éléments dont la température augmente et les mouvements de convection de l'air à proximité des éléments chauffants (16a et 16b).

Les échanges par rayonnement se caractérisent principalement par l'état de surface des matériaux utilisés qui sont donc choisis pour leur réflectivité thermique. Des traitements de surface spécifiques pourront être appliqués au raidisseur (21) et au deuxième réflecteur (22) afin de minimiser l'émissivité thermique des faces arrières des réflecteurs et afin d'augmenter la réflexion des faces avants.

Les échanges par convection se caractérisent principalement par la géométrie du grille-pain (1). En dessinant les différents volumes d'air (27, 28 et 32) entre l'élément chauffant (16a ou 16b) et le boîtier extérieur (2), l'échauffement de ce dernier est limité. D'une part, le boîtier extérieur (2) est ventilé avec de l'air frais entrant par les ouvertures d'admission (34). D'autre part, les échanges par convection sont limités entre le second réflecteur (22) et l'élément chauffant correspondant (16a, 16b). Les échanges par conduction ne sont pas prépondérants ici, les contacts entre chacune des pièces constitutives étant limités au maximum.

La feuille de mica (19), pratiquement transparentes aux infrarouges laisse les rubans résistifs rayonner (flèche R) librement dans toutes les directions, notamment du côté de la chambre de cuisson (12). La température de l'air augmentant, il se crée des courants de convection tendant à équilibrer la température de l'air chaud avec le reste de l'atmosphère. La température augmente fortement dans la chambre de cuisson (12).

Le raidisseur (21), dont le matériau a été choisi pour ses qualités de réflectivité, renvoie une grande partie du rayonnement vers le centre de la chambre de cuisson (12), au travers de la feuille de mica (19), augmentant ainsi la température au centre tout en isolant l'extérieur. L'isolation est encore améliorée par la forme du raidisseur (21) qui présente les volumes ou alvéoles d'air calme de petite taille (27) qui empêchent la convection et donc limitent les échanges thermiques.

Cela conduit à l'échauffement du raidisseur (21) qui à son tour rayonne dans toutes les directions. Côté intérieur, ce rayonnement se joint au rayonnement réfléchi directement. Côté extérieur, le rayonnement se heurte au deuxième réflecteur (22). Ce dernier isole donc le boîtier extérieur (2) du rayonnement induit. Mais le deuxième réflecteur (22) ménage aussi un volume fermé par le deuxième espacement (28), formant une couche d'air entre lui-même et le raidisseur (21), limitant ainsi encore davantage les échanges par convection.

Une dernière couche d'air est formée par le troisième espacement (32) entre le boîtier et le deuxième réflecteur (22). Cette couche est refroidie grâce à une circulation d'air forcée par la forme de la semelle (3) et du boîtier extérieur (2) et par le haut du deuxième réflecteur (22). Cet air est aspiré (flèche A en figure 2) en raison de l'effet de cheminée entre la semelle (3) et la fente (11), grâce à l'aspiration provoquée par le flux d'air chaud au sommet. La section la plus constante possible depuis l'ouverture (34) de la semelle (3) jusqu'à l'évacuation au sommet assure un débit d'air optimum. Cela permet de refroidir efficacement le boîtier extérieur (2) et de favoriser l'évacuation d'air chaud vers le haut et vers le centre.

Ainsi, le boîtier extérieur (2) est maintenu à des températures offrant une grande sécurité en cas de contact par l'utilisateur, dans un encombrement réduit et de façon économique. Le corollaire est le gain de rendement dans la chambre de cuisson (12) grâce à une meilleur maîtrise des dissipations de chaleur non souhaitées.

Un grille-pain (1) reprenant cette construction a été mis en oeuvre et permet de confirmer la bonne isolation recherchée. Des cycles de chauffe à vide ont été effectués avec ce grille-pain (1), un cycle étant égal à environ 60 secondes de chauffage suivi par environ 30 secondes de refroidissement. Des températures stabilisées de l'ordre de 70°C maximum à l'extérieur du boîtier plastique (2) du grille-pain (1) avec une puissance de 1250 W ont été obtenues après une dizaine de cycles de chauffe. Selon l'exemple proposé, à titre indicatif, la largeur hors tout du grille-pain est de l'ordre de 85 mm.

La présente invention n'est pas limitée aux modes de réalisation décrits et illustrés. De nombreuses modifications peuvent être réalisées, sans pour autant sortir du cadre défini par la portée du jeu de revendications.

Le nombre de chambres de cuisson (12) ainsi que le nombre d'élément chauffant (16a et 16b) peut varier. La conformation, le nombre et la disposition des saillies (24) et des excroissances (29) peuvent également varier.

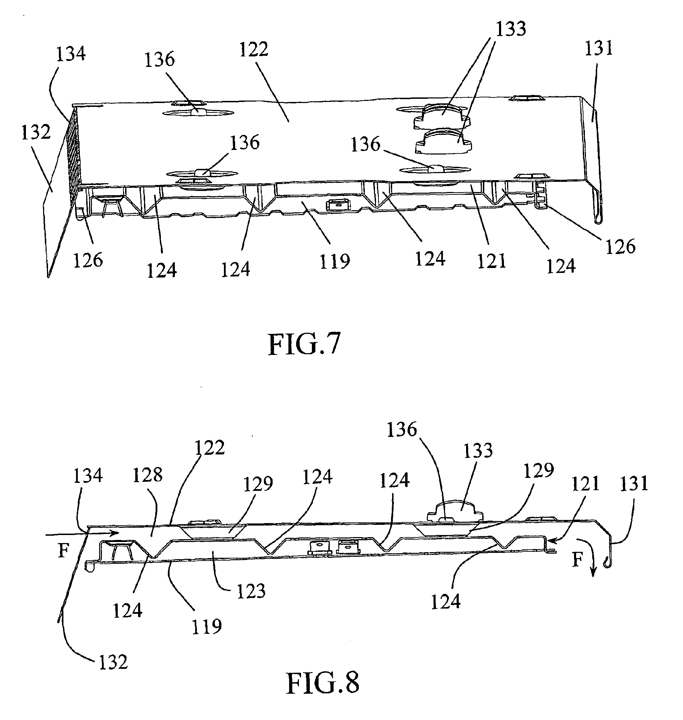

Les figures 7 et 8 montrent notamment une variante de réalisation, essentiellement du second réflecteur. Ainsi, le dispositif de maintien (121) intercalé entre la feuille de mica (119) et le second réflecteur (122) comprend 4 saillies (124) présentant une forme en V, la pointe du V étant en contact avec la feuille de mica (119) assurant sa tenue mécanique tout en limitant, par la forme du contact, les échanges thermiques par conduction.

Les saillies déterminent un premier espacement (123). Par ailleurs, le raidisseur (121) comprend également deux rebords longitudinaux (126) permettant l'ancrage de la feuille de mica (119) et la fermeture, sur ces côtés, de l'espacement (123).

Dans cette variante de réalisation, le deuxième réflecteur (122), séparé du raidisseur (121) par un deuxième espacement (128) déterminé par quatre excroissances (129) sous la forme de cônes se déployant à partir de sa face avant et venant en contact avec la face arrière du raidisseur (121), comporte deux rebords longitudinaux (131, 132) se déployant à partir de sa face avant et orientés vers le raidisseur (121). Ces rebords diffèrent de ceux présentés aux figures précédentes, notamment par la présence d'ouvertures (134) d'admission d'air au niveau du bord (132) de la plaque (122), qui est disposé en partie basse du grille-pain, lesdites ouvertures étant ainsi en continuité avec le second espacement (128).

Par ailleurs, ce second espacement n'est pas fermé, les bords longitudinaux (131, 132) du second réflecteur (122) ne reposant pas sur les bords (126) du dispositif de maintien (121).

Le maintien du second réflecteur sur le premier est assuré par des pattes de fixation (136) issues du raidisseur (121) et passant au travers d'ouvertures ménagées au centre des cônes (129) du second réflecteur.

Le troisième espacement séparant le réflecteur (122) du boîtier extérieur est défini par les deux entretoises (133) se déployant à partir de la face arrière du second réflecteur (122) et venant en contact avec la face interne du boîtier extérieur du grille-pain.

Le fonctionnement du grille-pain équipé d'éléments chauffants et de leur protection thermique selon cette variante de réalisation est sensiblement identique au fonctionnement décrit précédemment. Toutefois, le second espacement (128) n'est pas un espacement de confinement de l'air mais au contraire de circulation d'air, entrant par les ouvertures (134) du bord (132) et ressortant au niveau du bord (131), selon le sens (F) de circulation.

En effet, selon les configurations et notamment la puissance de chauffe des éléments chauffants, on a intérêt à faire une circulation d'air plutôt qu'à garder l'air confiné.

## Revendications

1. Elément chauffant, notamment destiné à un grille-pain, présentant au moins une feuille de mica (19, 119) sur laquelle est bobiné un ruban chauffant, ainsi qu'un dispositif de maintien (21, 121), se présentant sous la forme d'une plaque sensiblement plane, destiné à tenir la ou les feuilles de mica (19, 119) et à former un premier réflecteur, **caractérisé en ce qu'**il comprend en outre une plaque (22, 122) solidarisée au dispositif de maintien (21, 121) et destinée à former un deuxième réflecteur.

2. Elément chauffant selon la revendication 1, **caractérisé en ce que** le dispositif de maintien (21, 121) est séparé de la ou des feuilles de mica (19, 119) par un premier espacement (23, 123).

3. Elément chauffant selon la revendication 2, **caractérisé en ce que** le dispositif de maintien (21, 121) comprend une ou plusieurs saillies (24, 124) venant en contact avec la ou les feuilles de mica (19, 119) et définissant l'épaisseur du premier espacement (23, 123).

4. Elément chauffant selon la revendication 3, **caractérisé en ce que** la ou les saillies se présentent sous la forme de nervures longitudinales (24, 124) formant au moins deux volumes distincts (27) sensiblement fermés situés à l'intérieur du premier espacement (23, 123).

5. Elément chauffant selon l'une quelconque des revendications précédentes, **caractérisé en ce que** la plaque (22, 122) est séparée du dispositif de maintien (21, 121) par un deuxième espacement (28, 128).

6. Elément chauffant selon la revendication 5, **caractérisé en ce que** la plaque (22, 122) comprend une ou plusieurs excroissances (29, 129) venant en contact avec le dispositif de maintien (21, 121), définissant l'épaisseur du deuxième espacement (28, 128) et formant un volume sensiblement fermé situé à l'intérieur du deuxième espacement (28, 128).

7. Elément chauffant selon l'une quelconque des revendications précédentes, **caractérisé en ce que** la plaque (122) comprend une ou plusieurs ouvertures (134) d'admission d'air en continuité avec le second espacement (128).

8. Elément chauffant selon l'une quelconque des revendications précédentes, **caractérisé en ce que** le dispositif de maintien (21, 121) et la plaque (22, 122) sont réalisés en tôle métallique emboutie et pliée et/ou avec traitement de surface ayant des propriétés de réflectivité thermique.

9. Grille-pain électrique comprenant une semelle (3), un boîtier (2), une chambre de cuisson (12) s'ouvrant par une fente d'entrée et de sortie du pain (11) et intégrant un chariot porte-pain mobile, et au moins un élément chauffant (16a, 16b), sensiblement vertical, selon l'une quelconque des revendications précédentes.

10. Grille-pain selon la revendication 9, **caractérisé en ce que** le boîtier (2) est séparé de la plaque (22, 122) de l'élément chauffant (16a, 16b) par un troisième espacement (32) formant un volume ouvert au niveau de son extrémité supérieure vers la fente d'entrée et de sortie du pain (11).

11. Grille-pain selon la revendication 9 ou 10, **caractérisé en ce que** la plaque (22, 122) comprend une ou plusieurs entretoises (33, 133) venant en contact avec le boîtier (2).

12. Grille-pain selon la revendication 10 ou 11, **caractérisé en ce que** la semelle (3) comprend une ou plusieurs ouvertures d'admission d'air (34) en continuité avec le troisième espacement (32).

## Claims

1. A heater element, in particular for a toaster, the element presenting at least one mica sheet (19, 119) having a heater tape wound thereon, and a holder device (21, 121) in the form of a substantially plane plate for holding the mica sheet(s) (19, 119) and for forming a first reflector, the element being **characterized in that** it further comprises a plate (22, 122) secured to the holder device (21, 121) and serving to form a second reflector.

2. A heater element according to claim 1, **characterized in that** the holder device (21, 121) is separated from the mica sheet(s) (19, 119) by a first spacing (23, 123).

3. A heater element according to claim 2, **characterized in that** the holder device (21, 121) includes one or more projections (24, 124) coming into contact with the mica sheet(s) (19, 119) and defining the thickness of the first spacing (23, 123).

4. A heater element according to claim 3, **characterized in that** the projection(s) is/are in the form of longitudinal ribs (24, 124) forming at least two distinct substantially-closed volumes (27) situated inside the first spacing (23, 123).

5. A heater element according to any preceding claim, **characterized in that** the plate (22, 122) is separated from the holder device (21, 121) by a second spacing (28, 128).

6. A heater element according to claim 5, **characterized in that** the plate (22, 122) includes one or more protrusions (29, 129) coming into contact with the holder device (21,121), defining the thickness of the second spacing (28, 128), and forming a substantially-closed volume situated inside the second spacing (28, 128).

7. A heater element according to any preceding claim, **characterized in that** the plate (122) includes one or more air-admission openings (134) in continuity with the second spacing (128).

8. A heater element according to any preceding claim, **characterized in that** the holder device (21, 121) and the plate (22, 122) are made of stamped and folded metal sheet and/or with surface treatment having thermal reflectivity properties.

9. An electric toaster comprising a sole plate (3), a housing (2), a toasting chamber (12) opening via an inlet and outlet slot for bread (11) and including a moving bread-carriage, and at least one substantially vertical heater element (16a, 16b) according to any preceding claim.

10. A toaster according to claim 9, **characterized in that** the housing (2) is separated from the plate (22, 122) of the heater element (16a, 16b) by a third spacing (32) forming a volume that is open at its top end towards the bread inlet and outlet slot (11).

11. A toaster according to claim 9 or claim 10, **characterized in that** the plate (82, 122) includes one or more spacers (33, 133) coming into contact with the housing (2).

12. A toaster according to claim 10 or claim 11, **characterized in that** the sole plate (3) includes one or more air-admission openings (34) in continuity with the third spacing (32).

## Patentansprüche

1. Heizelement, das insbesondere für einen Toaster vorgesehen ist und mindestens ein Glimmerplättchen (19, 119), auf das ein Heizband gewickelt ist, und eine Haltevorrichtung (21, 121) aufweist, die als im Wesentlichen ebene Platte ausgebildet und dazu vorgesehen ist, das oder die Glimmerplättchen (19, 119) zu halten und einen ersten Reflektor zu bilden, **dadurch gekennzeichnet, dass** es ferner eine fest mit der Haltevorrichtung (21, 121) verbundene Platte (22, 122) aufweist, die dazu vorgesehen ist, einen zweiten Reflektor zu bilden.

2. Heizelement nach Anspruch 1, **dadurch gekennzeichnet, dass** die Haltevorrichtung (21, 121) durch einen ersten Zwischenraum (23, 123) von dem oder den Glimmerplättchen (19, 119) getrennt ist.

3. Heizelement nach Anspruch 2, **dadurch gekennzeichnet, dass** die Haltevorrichtung (21, 121) einen Vorsprung oder mehrere Vorsprünge (24, 124) aufweist, der/die mit dem oder den Glimmerplättchen (19, 119) in Kontakt gelangt/gelangen und die Dicke des ersten Zwischenraums (23, 123) begrenzt/begrenzen.

4. Heizelement nach Anspruch 3, **dadurch gekennzeichnet, dass** der Vorsprung oder die Vorsprünge als Längsrippen (24, 124) ausgebildet ist/sind, die mindestens zwei getrennte, im Wesentlichen geschlossene Volumina (27) bilden, die sich im ersten Zwischenraum (23, 123) befinden.

5. Heizelement nach einem der vorhergehenden Ansprüche, **dadurch gekennzeichnet, dass** die Platte (22, 122) durch einen zweiten Zwischenraum (28, 128) von der Haltevorrichtung (21, 121) getrennt ist.

6. Heizelement nach Anspruch 5, **dadurch gekennzeichnet, dass** die Platte (22, 122) eine Erhebung oder mehrere Erhebungen (29, 129) aufweist, die mit der Haltevorrichtung (21, 121) in Kontakt gelangt/gelangen, die Dicke des zweiten Zwischenraums (28, 128) begrenzt/begrenzen und ein im Wesentlichen geschlossenes Volumen bildet/bilden, welches sich im zweiten Zwischenraum (28, 128) befindet.

7. Heizelement nach einem der vorhergehenden Ansprüche, **dadurch gekennzeichnet, dass** die Platte (122) eine Lufteinlassöffnung oder mehrere Lufteinlassöffnungen (134) aufweist, die unmittelbar an den zweiten Zwischenraum (128) angrenzt/angrenzen.

8. Heizelement nach einem der vorhergehenden Ansprüche, **dadurch gekennzeichnet, dass** die Haltevorrichtung (21, 121) und die Platte (22, 122) aus Metallblech hergestellt sind, weiches tiefgezogen und gebogen ist und/oder einer Oberflächenbehandlung unterworfen wurde und thermische Reflektionseigenschaften besitzt.

9. Elektrischer Toaster mit einer Sohle (3), einem Gehäuse (2), einer Röstkammer (12), die über einen Spalt (11) zum Einlegen und Herausnehmen des Brots geöffnet ist und einen beweglichen Brothalterschlitten aufnimmt, und mit mindestens einem im Wesentlichen vertikalen Heizelement (16a, 16b) nach einem der vorhergehenden Ansprüche.

10. Toaster nach Anspruch 9, **dadurch gekennzeichnet, dass** das Gehäuse (2) durch einen dritten Zwischenraum (32) von der Platte (22, 122) des Heizelements (16a, 16b) getrennt ist, wobei der Zwischenraum ein Volumen bildet, das an seinem oberen Ende zum Spalt (11) zum Einlegen und Herausnehmen des Brots geöffnet ist.

11. Toaster nach Anspruch 9 oder 10, **dadurch gekennzeichnet, dass** die Platte (22, 122) ein Zwischenelement oder mehrere Zwischenelemente (33, 133) aufweist, das/die mit dem Gehäuse (2) in Kontakt gelangt/gelangen.

12. Toaster nach Anspruch 10 oder 11, **dadurch gekennzeichnet, dass** die Sohle (3) eine Lufteinlassöffnung oder mehrere Lufteinlassöffnungen (34) aufweist, die unmittelbar an den dritten Zwischenraum (32) angrenzt/angrenzen.
